# EUROPEAN PATENT APPLICATION

(11) **EP 4 516 466 A1**
(43) Date of publication of application: **05.03.2025**
(21) Application number: 23830849.8
(22) Date of filing: 11.05.2023
(51) Int. Cl.: B25J 13/08

(54) **ROBOT, ROBOT CONTROL DEVICE, ROBOT CONTROL METHOD, AND PROGRAM**

(30) Priority: 01.07.2022 JP 2022107114
(71) Applicant: Mitsubishi Heavy Industries Aero Engines, Ltd., Komaki-shi, Aichi 485-0826, (JP)
(72) Inventor: EGASHIRA, Kento, Komaki-shi, Aichi 485-0826 (JP); KURIHARA, Hiroshi, Komaki-shi, Aichi 485-0826 (JP); NAKAMURA, Futoshi, Komaki-shi, Aichi 485-0826 (JP); ISHIDA, Makoto, Tokyo 100-8332 (JP); ASANO, Shin, Tokyo 100-8332 (JP); SUGIURA, Atsushi, Tokyo 100-8332 (JP)
(74) Representative: Studio Torta S.p.A.
(86) International application number: PCT/JP2023/017739
(87) International publication number: WO 2024/004397

(57) **Abstract**

The present invention guides a plurality of feature parts provided on an assembled component to respective corresponding target positions set on a component to be assembled. Provided is a control device (60) comprising: first reference point correction unit (62) that compares the state of a plurality of studs when a panel is being held by a robot arm and the state of studs when the training data was obtained and thereby corrects training data of a first reference point defined corresponding to each of the studs to obtain a first corrected reference point; a target reference point setting unit (64) that sets one of the plurality of first corrected reference points as a target reference point on the basis of a preset order; and an arm control unit (65) that controls the robot arm so that the target reference point matches with a second reference point set corresponding to a through hole of an inner liner. When determined that the target reference point has matched with the corresponding second reference point, the target reference point setting unit (64) sets the next first corrected reference point in said order as the target reference point.

## Description

### Technical Field

The present disclosure relates to a robot, a robot control device, a robot control method, and a program.

### Background Art

For example, a method of assembling an assembling component to a component to be assembled by gripping an assembling component of which the three-dimensional shape is recognized by a robot and handling a robot arm has been proposed.

For example, PTL 1 proposes a method of assembling a screw, which is an assembling component, to a screw hole provided in a component to be assembled. More specifically, PTL 1 discloses an assembling device that controls an operation of a work unit such that a TCP gripping position, which is a first reference position corresponding to a first reference point of an assembling component specified in three-dimensional model data, and a TCP assembling position, which is a second reference position corresponding to a second reference point of an assembling component specified in three-dimensional model data of a component to be assembled, are associated with each other.

### Citation List

### Patent Literature

[PTL 1] Japanese Unexamined Patent Application Publication No. 2013-099808

### Summary of Invention

### Technical Problem

PTL 1 discloses a method of assembling a screw, which is an assembling component, to a screw hole provided on a component to be assembled. However, this method is merely simple fitting work of fitting one screw into one screw hole.

As a result, for example, it is difficult to cope with complex assembling work of guiding a plurality of feature portions (for example, protruding portions such as screws and stud bolts) provided on an assembling component to corresponding target positions (for example, openings such as screw holes and through-holes) provided on a component to be assembled.

The present disclosure has been made in view of such circumstances, and an object of the present disclosure is to provide a robot, a robot control device, a robot control method, and a program capable of guiding a plurality of feature portions provided on an assembling component to corresponding target positions which are set on a component to be assembled.

### Solution to Problem

According to a first aspect of the present disclosure, there is provided a robot control device that causes a robot arm to grip an assembling component having N (N is an integer equal to or larger than 2) first feature portions and to assemble the assembling component to a component to be assembled having N second feature portions corresponding to the first feature portions, the robot control device including: a first reference point correction unit that obtains M (M is an integer equal to or larger than 2 and equal to or smaller than N) first correction reference points by correcting teaching data of M first reference points defined corresponding to each of M first feature portions by comparing states of the M first feature portions in a state where the assembling component is gripped by the robot arm with states of the M first feature portions when the teaching data is obtained; a target reference point setting unit that sets one of the M first correction reference points as a target reference point based on a preset order; and an arm control unit that controls the robot arm such that the target reference point is matched with a second reference point which is set corresponding to the second feature portion of the component to be assembled, in which the target reference point setting unit sets the first correction reference point in a next order as the target reference point in a case where it is determined that the target reference point is matched with a corresponding second reference point.

According to a second aspect of the present disclosure, there is provided a robot including the robot control device.

According to a third aspect of the present disclosure, there is provided a robot control method of causing a robot arm to grip an assembling component having N (N is an integer equal to or larger than 2) first feature portions and to assemble the assembling component to a component to be assembled having N second feature portions corresponding to the first feature portions, the robot control method causing a computer to execute: a step of obtaining M (M is an integer equal to or larger than 2 and equal to or smaller than N) first correction reference points by correcting teaching data of M first reference points defined corresponding to each of M first feature portions by comparing states of the M first feature portions in a state where the assembling component is gripped by the robot arm with states of the M first feature portions when the teaching data is obtained; a step of setting one of the M first correction reference points as a target reference point based on a preset order; a step of controlling the robot arm such that the target reference point is matched with a second reference point which is set corresponding to the second feature portion of the component to be assembled; and a step of setting the first correction reference point in a next order as the target reference point in a case where it is determined that the target reference point is matched with a corresponding second reference point.

According to a fourth aspect of the present disclosure, there is provided a program for causing a computer to function as the robot control device. Advantageous Effects of Invention

According to the robot, the robot control device, the robot control method, and the program according to the present disclosure, there is an effect that it is possible to guide a plurality of feature portions provided on an assembling component to corresponding target positions that are set on a component to be assembled.

### Brief Description of Drawings

Fig. 1 is a schematic perspective view illustrating a combustor according to an embodiment of the present disclosure.
Fig. 2 is a schematic cross-sectional view of the combustor taken along a line II-II of Fig. 1.
Fig. 3 is a schematic perspective view of an outer combustor according to the embodiment of the present disclosure.
Fig. 4 is a schematic perspective view of an inner combustor according to the embodiment of the present disclosure.
Fig. 5 is a schematic perspective view of an inner liner before attachment of a panel according to the embodiment of the present disclosure.
Fig. 6 is a schematic perspective view of a panel according to the embodiment of the present disclosure.
Fig. 7 is a schematic perspective view of a bulkhead.
Fig. 8 is a diagram illustrating a schematic configuration of a robot according to the embodiment of the present disclosure.
Fig. 9 is a functional block diagram illustrating an example of functions of a control device according to the embodiment of the present disclosure.
Fig. 10 is a diagram illustrating an example of two-dimensional panel master data according to the embodiment of the present disclosure.
Fig. 11 is a diagram for explaining a first reference point according to the embodiment of the present disclosure.
Fig. 12 is a diagram illustrating an example of two-dimensional liner master data according to the embodiment of the present disclosure.
Fig. 13 is a diagram for explaining a second reference point according to the embodiment of the present disclosure.
Fig. 14 is a diagram for explaining a deviation in a gripping position of an end effector when gripping a panel.
Fig. 15 is a diagram for explaining a deviation in a gripping angle of an end effector when gripping a panel.
Fig. 16 is a diagram for explaining a deviation in a gripping angle of an end effector when gripping a panel.
Fig. 17 is a flowchart illustrating an example of a processing procedure of a robot control method according to the embodiment of the present disclosure.
Fig. 18 is a flowchart illustrating an example of a processing procedure of a robot control method according to the embodiment of the present disclosure.
Fig. 19 is a schematic diagram for explaining a switching timing of a first reference point when a panel is assembled to an inner liner.
Fig. 20 is a schematic diagram for explaining a switching timing of a first reference point when a panel is assembled to an inner liner.
Fig. 21 is a schematic diagram for explaining a switching timing of a first reference point when a panel is assembled to an inner liner.
Fig. 22 is a schematic diagram for explaining a switching timing of a first reference point when a panel is assembled to an inner liner.
Fig. 23 is a diagram for explaining definition of a first reference point according to another aspect of the present disclosure.

### Description of Embodiments

Hereinafter, an embodiment of a robot, a robot control device, a robot control method, and a program according to the present disclosure will be described with reference to the drawings. In the following description, a case where the robot, the robot control device, the robot control method, and the program according to the present disclosure are applied to a part of an assembling step of a combustor 1 will be described as an example, but the present disclosure is not limited to this example. That is, the robot, the robot control device, the robot control method, and the program according to the present disclosure can be widely applied to assembling work of guiding a plurality of feature portions (for example, protruding portions such as screws and stud bolts) provided in assembling components to corresponding target positions (for example, openings such as screw holes and through-holes) that are set on a component to be assembled.

### [Basic Configuration of Combustor]

A basic configuration of a combustor 1 will be described. The combustor 1 is a device that defines a combustion chamber CC which generates a high-temperature combustion gas for rotating a turbine by mixing compressed air and fuel and combusting the mixture, in, for example, a turbofan engine mounted in an aircraft.

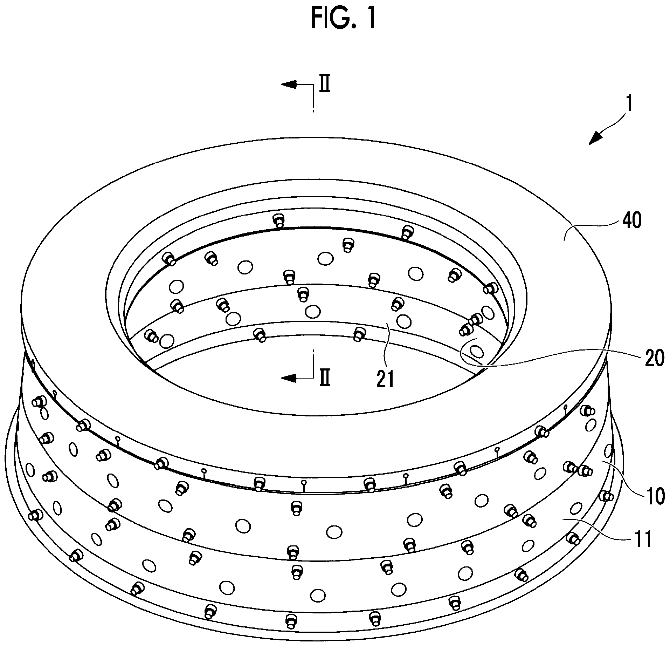

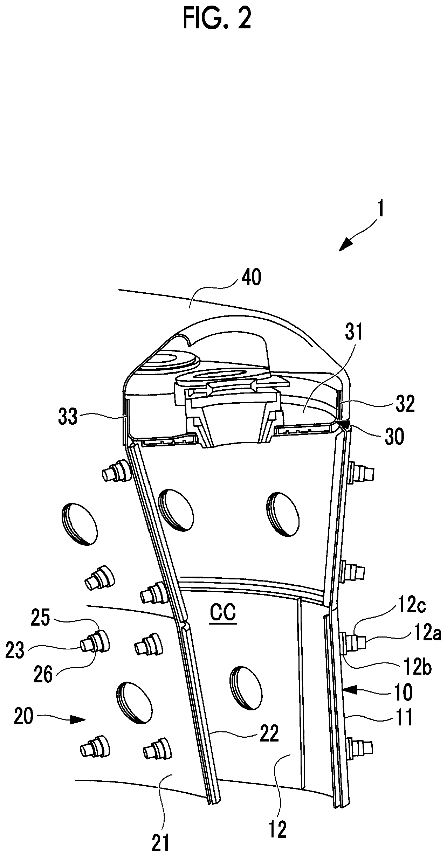

Fig. 1 is a schematic perspective view of the combustor 1 according to an embodiment of the present disclosure, and Fig. 2 is a schematic cross-sectional view of the combustor 1 taken along a line II-II of Fig. 1. As illustrated in Fig. 1 and 2, the combustor 1 includes an outer combustor 10, an inner combustor 20, a bulkhead 30 (refer to Fig. 2), and a hood 40. The combustion chamber CC is defined by the outer combustor 10, the inner combustor 20, and the bulkhead 30.

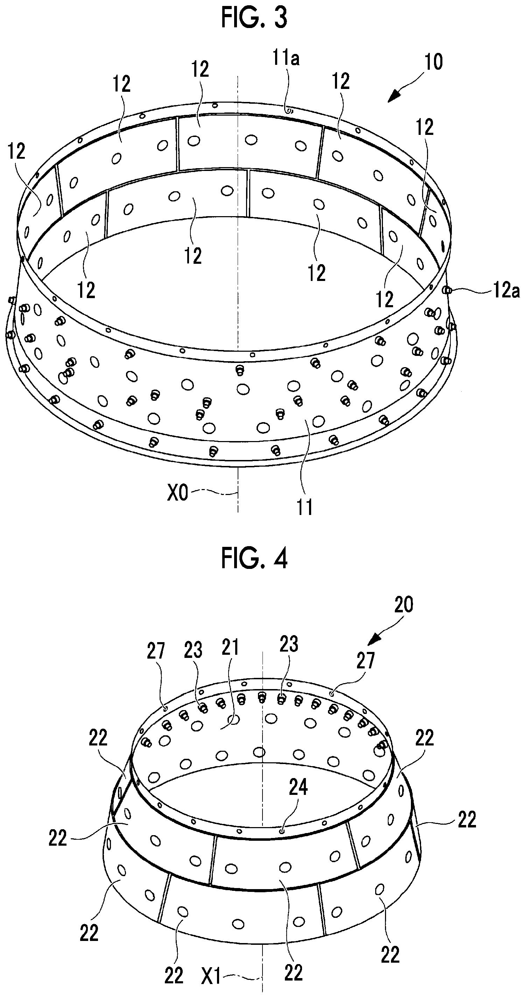

Fig. 3 is a schematic perspective view of the outer combustor 10. As illustrated in Fig. 3, the outer combustor 10 is a component having a cylindrical shape as a whole. The outer combustor 10 includes an outer liner 11 and a plurality of outer liner panels 12 (hereinafter, simply referred to as "panels 12") provided on an inner peripheral surface of the outer liner 11.

The outer liner 11 is, for example, a metal component having a cylindrical shape with an axis X0 as a central axis, and is made of, for example, a sheet metal. The inner peripheral surface of the outer liner 11 facing the combustion chamber CC is divided by the plurality of panels 12, and is almost entirely covered with the plurality of panels 12. The panel 12 thermally protects the outer liner 11 from the combustion gas.

As illustrated in Fig. 2 and Fig. 3, each panel 12 is a component having an arc shape corresponding to a shape of each part of an outer peripheral surface of the outer liner 11, and is configured by, for example, performing a heat-resistant treatment (for example, ceramic coating) on a surface of a cast plate member.

A plurality of studs 12a that protrude outward are provided on an outer peripheral surface of each panel 12.

Each panel 12 is fixed to the outer liner 11 by inserting the stud 12a into a hole formed on the outer liner 11 and attaching a washer 12b and a nut 12c to the stud 12a protruding from the hole.

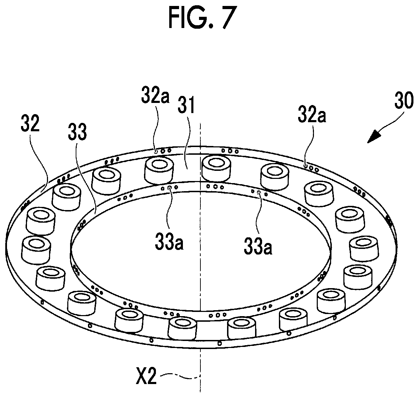

A plurality of through-holes 11a are formed on a peripheral surface (edge portion) of one end side of the outer liner 11 at approximately equal angular intervals along a circumferential direction with the axis X0 as a central axis. The edge portion is not covered with the panel 12. An outer wall portion 32 of the bulkhead 30 (refer to Fig. 7) is fitted to the edge portion (for example, interference fit).

Fig. 4 is a schematic perspective view of the inner combustor 20. As illustrated in Fig. 4, the inner combustor 20 is a component having a cylindrical shape as a whole. The inner combustor 20 includes, for example, the inner liner 21 and a plurality of inner liner panels 22 (hereinafter, simply referred to as "panels 22") provided on an outer peripheral surface of the inner liner 21. As illustrated in Fig. 1 and Fig. 2, the inner combustor 20 is disposed inside the outer combustor 10 in the assembled combustor 1.

As illustrated in Fig. 4, the inner liner 21 is, for example, a metal component having a cylindrical shape with an axis X1 as a central axis, and is, for example, a sheet metal. An outer peripheral surface of the inner liner 21 facing the combustion chamber CC is divided by the plurality of panels 22, and is almost entirely covered with the plurality of panels 22. The panel 22 thermally protects the inner liner 21 from the combustion gas.

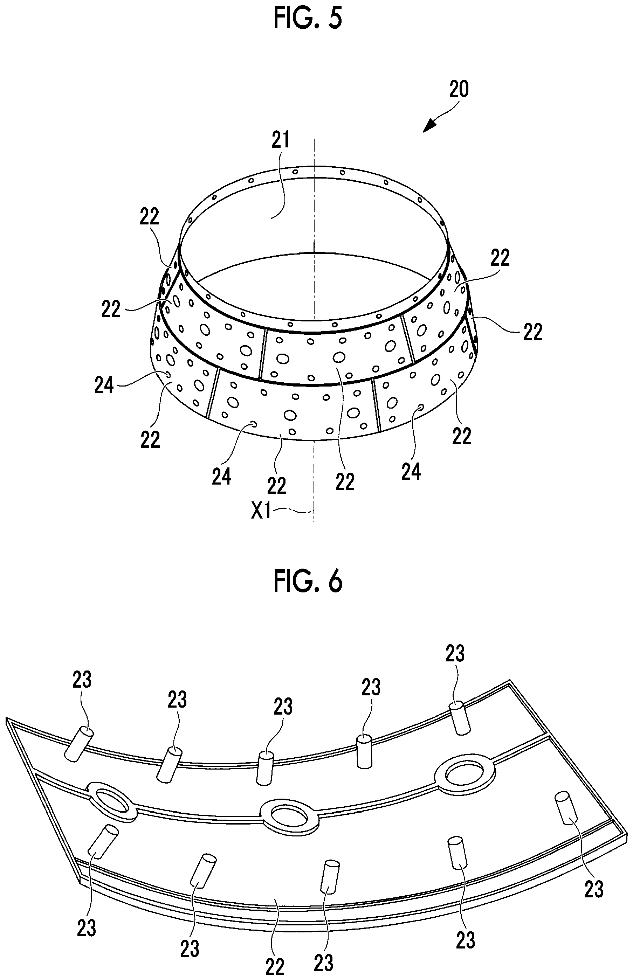

Fig. 5 is a schematic perspective view of the inner liner 21 before the panel 22 is attached, and Fig. 6 is a schematic perspective view of the panel 22. As illustrated in Fig. 5, a plurality of through-holes 24 are formed on a peripheral surface of the inner liner 21 along the circumferential direction with the axis X1 as a central axis at approximately equal angular intervals. In Fig. 5, a part of the through-holes 24 is not illustrated.

As illustrated in Fig. 6, the panel 22 is a component having an arc shape corresponding to a shape of each part of an outer peripheral surface of the inner liner 21, in other words, a component having a curvature, and is configured by, for example, performing a heat-resistant treatment (for example, ceramic coating) on a surface of a cast plate member. A plurality of stud bolts (hereinafter, referred to as "studs") 23 that protrude inward are provided on an inner peripheral surface of the panel 22. The studs 23 are provided at intervals along a curvature direction of the panel 22. The studs 23 of the panel 22 are inserted into through-holes 24 (refer to Fig. 5) formed on the inner liner 21. Then, as illustrated in Fig. 2, a washer 25 and a nut 26 are attached to the stud 23 protruding from the through-hole 24 from the inside of the inner liner 21, and thus, the panel 22 is fixed to the inner liner 21.

As illustrated in Fig. 4, through-holes 27 provided at an edge portion of the inner liner 21 are not covered with the panel 22. An inner wall portion 33 of the bulkhead 30 is fitted to the edge portion (for example, interference fit). In Fig. 4, a part of the through-holes 27 and a part of the studs 23 are not illustrated.

Fig. 7 is a schematic perspective view of the bulkhead 30. As shown in Fig. 1, the bulkhead 30 is an annular component that is provided to close an annular opening formed between one end of the outer combustor 10 and one end of the inner combustor 20 with the axis X0 as a central axis.

As illustrated in Fig. 7, the bulkhead 30 has an annular bottom portion 31, an outer wall portion 32 that is erected from an outer peripheral edge of the bottom portion 31, and an inner wall portion 33 that is erected from an inner peripheral edge of the bottom portion 31. The outer wall portion 32 is fitted to the outer liner 11. The inner wall portion 33 is fitted to the inner liner 21.

A plurality of through-holes 32a are formed on the outer wall portion 32 at approximately equal angular intervals along the circumferential direction with an axis X2 as a central axis. The angular interval between the through-holes 32a is the same as the angular interval between the through-holes 11a (refer to Fig. 3). Therefore, in a case where the bulkhead 30 is fitted to the outer liner 11, a position of each of the through-holes 32a and a position of each of the through-holes 11a can be matched with each other in the circumferential direction.

A plurality of through-holes 33a are formed on the inner wall portion 33 at approximately equal angular intervals along the circumferential direction with the axis X2 as a central axis.

The angular interval between the through-holes 33a is the same as the angular interval between the through-holes 27 (refer to Fig. 4). Therefore, in a case where the bulkhead 30 is fitted to the inner liner 21, a position of each of the through-holes 32a and a position of each of the through-holes 27 can be matched with each other in the circumferential direction.

As illustrated in Fig. 2, in the assembled combustor 1, the outer wall portion 32 of the bulkhead 30 is in contact with the inner peripheral surface of the outer combustor 10, and the inner wall portion 33 of the bulkhead 30 is in contact with the inner peripheral surface of the inner combustor 20.

The bulkhead 30 is fixed to the outer combustor 10 and the inner combustor 20 by screwing a bolt (not illustrated), which is inserted into the outer wall portion 32 and the outer combustor 10, into a nut plate provided in the outer wall portion 32, and screwing a bolt (not illustrated), which is inserted into the inner wall portion 33 and the inner combustor 20, into a nut plate provided in the inner wall portion 33.

As illustrated in Fig. 1 and Fig. 2, the hood 40 is an annular component that is provided to cover the bulkhead 30.

The combustor 1 having the above configuration functions as follows.

That is, air compressed by a compressor and fuel are supplied to the combustion chamber CC, and are mixed in the combustion chamber CC. Then, the mixed fluid of the air and the fuel is combusted in the combustion chamber CC, and thus, a high-temperature combustion gas for rotating a turbine is generated.

### [Assembling Step of Panel 22]

The robot, the robot control device, the robot control method, the program, and the robot according to the present embodiment are applied to a step of assembling the panel 22 (refer to Fig. 6) to the inner liner 21 (refer to Fig. 5) in the above-described assembling step of the combustor 1.

Specifically, the present invention is applied to a step of gripping a panel (an assembling component) having a plurality of studs (first feature portions) by a robot arm and assembling the panel to an inner liner (a component to be assembled) having a plurality of through-holes 24 (second feature portions) corresponding to each of the studs.

### [Configuration of Robot]

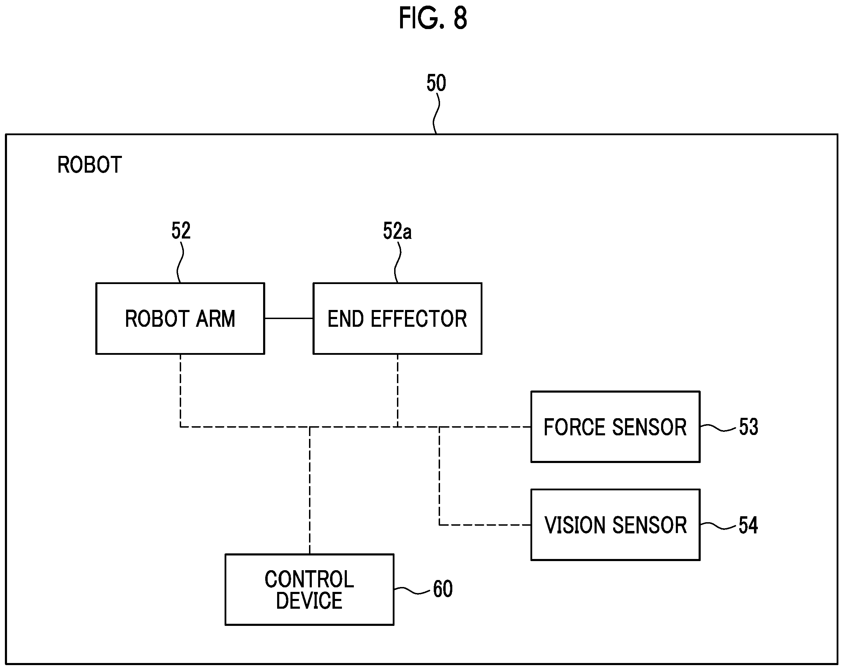

Fig. 8 is a diagram illustrating a schematic configuration of a robot 50 according to the embodiment of the present disclosure. As illustrated in Fig. 8, the robot 50 includes a robot arm 52 and an end effector 52a attached to a distal end of the robot arm 52. Further, the robot 50 includes a control device (robot control device) 60 that controls the robot 50.

For example, the robot arm 52 is provided with a force sensor 53. For example, the force sensor 53 is provided between the distal end of the robot arm 52 and the end effector 52a. The force sensor is, for example, a 6-axis force sensor, and detects a force (reaction force) and a moment that the panel receives from the inner liner 21 in a case where the stud 23 of the panel 22 comes into contact with the inner liner 21. A detection value of the force sensor is output to the control device 60.

The robot 50 may include a vision sensor 54. The vision sensor 54 is used for acquiring shape data of the panel 22, acquiring shape data of the inner liner 21, detecting a position in the attachment step of the panel 22 to the inner liner 21, and the like. For example, the vision sensor 54 performs imaging in a state where the panel 22 to be attached is gripped by the end effector 52a, and acquires two-dimensional data and three-dimensional data of the panel 22. In a state where the inner liner 21 to which the panel 22 is to be attached is fixed, imaging is performed, and thus, image data of the inner liner 21 is acquired. The vision sensor 54 may be a two-dimensional sensor or a three-dimensional sensor. In the present embodiment, the vision sensor 54 includes a two-dimensional sensor and a three-dimensional sensor.

The two-dimensional data and the three-dimensional data acquired by the vision sensor 54 are output to the control device 60. An installation position of the vision sensor 54 is not particularly limited. The vision sensor 54 can be appropriately installed at an appropriate position depending on the purpose of use. A plurality of vision sensors 54 may be provided.

The robot 50 is, for example, a robot driven by six axes. The robot 50 can guide the end effector 52a provided at the distal end of the robot arm 52 to a desired position by controlling an angle of each joint (link).

The control device (controller) 60 includes, for example, a central processing unit (CPU, processor), a main memory, a secondary storage (memory), and the like. Further, the control device 60 may include a communication unit for transmitting and receiving information to and from another device.

The main memory is configured with, for example, a writable memory such as a cache memory or a random access memory (RAM), and is used as a work region performing reading of an execution program of the CPU, writing of processing data by the execution program, or the like.

The secondary storage is a non-transitory computer readable storage medium. The secondary storage is, for example, a magnetic disk, a magneto-optical disk, a CD-ROM, a DVD-ROM, a semiconductor memory, or the like.

As an example, a series of processes for implementing various functions to be described later are stored in the secondary storage in a program form. The CPU reads the program into the main memory to execute information processing and operation processing, and thus, various functions are implemented. In the program, a form in which the program is installed in advance in the secondary storage, a form in which the program is provided by being stored in a computer-readable storage medium, a form in which the program is delivered via wired communication or wireless communication, or the like may be applied. The computer-readable storage medium is a magnetic disk, a magneto-optical disk, a CD-ROM, a DVD-ROM, a semiconductor memory, or the like.

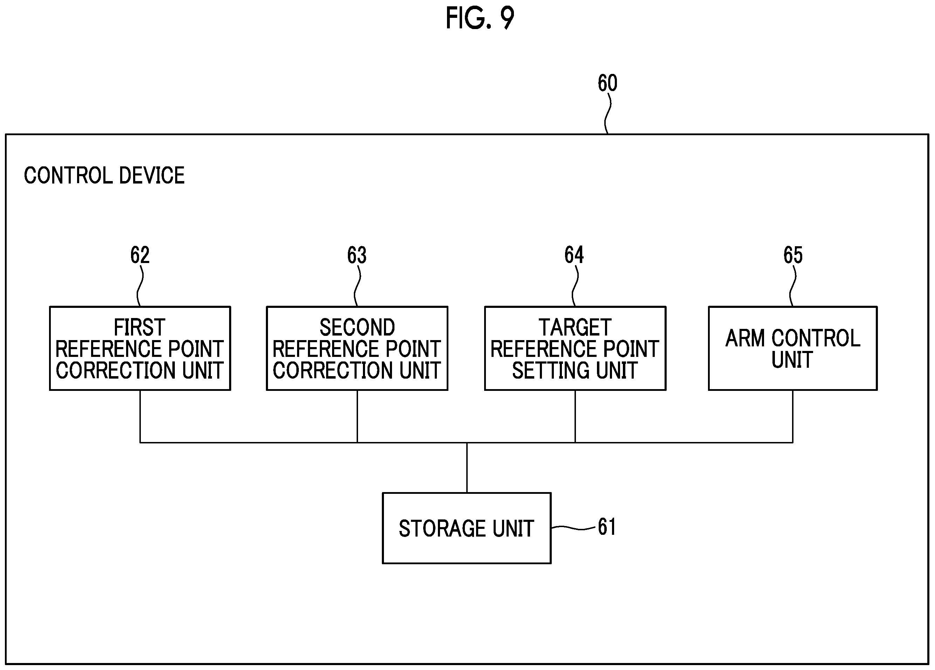

Fig. 9 is a functional block diagram illustrating an example of functions of the control device 60. As illustrated in Fig. 9, the control device 60 includes, for example, a storage unit 61, a first reference point correction unit 62, a second reference point correction unit 63, a target reference point setting unit 64, and an arm control unit 65.

The storage unit 61 stores teaching data of the robot 50 created in advance. For example, the storage unit 61 stores various data for guiding and fitting each of the plurality of studs (feature portions) 23 provided on the panel 22, which is an assembling component, into each of the through-holes 24 provided on the inner liner 21, which is a component to be assembled, as teaching data.

The teaching data includes various data used for teaching the robot 50.

For example, the teaching data includes two-dimensional data (hereinafter, referred to as "two-dimensional panel master data") and three-dimensional data (hereinafter, referred to as "three-dimensional panel master data") of the end effector 52a that grips the panel 22 at the time of teaching.

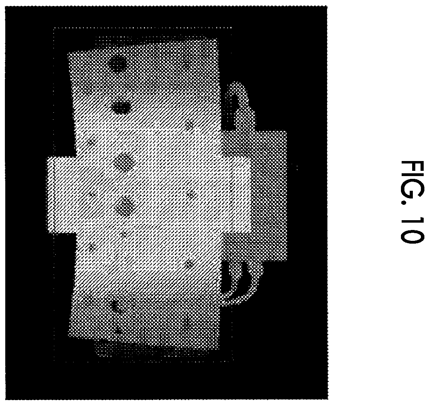

Fig. 10 is a diagram illustrating an example of two-dimensional panel master data.

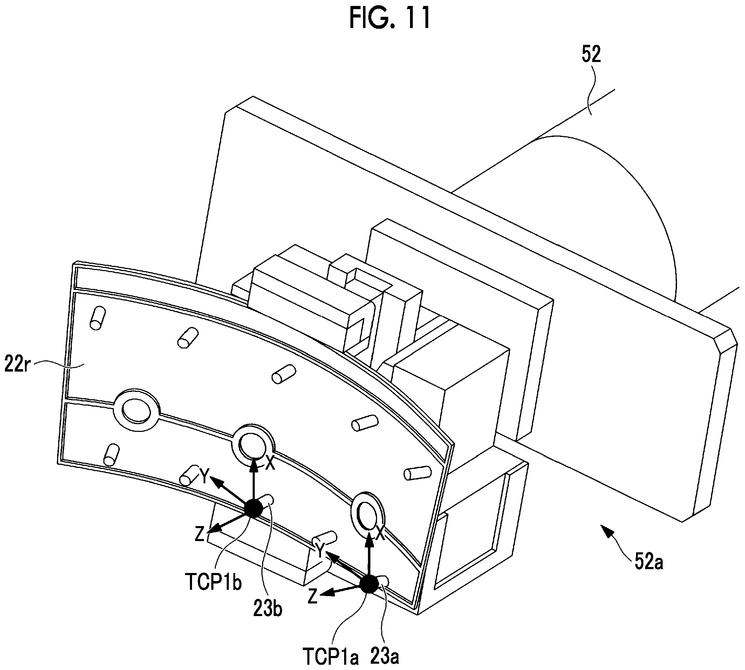

The teaching data includes pieces of position data of the plurality of first reference points defined on the panel 22 and the like. Fig. 11 is a diagram for explaining the first reference point. The configuration of the end effector 52a illustrated in Fig. 11 is an example, and is not limited thereto. As illustrated in Fig. 11, in the present embodiment, the first reference point is defined at a distal end of the stud 23. In the present embodiment, as an example, two first reference points TCP1a and TCP1b are defined. For example, the first reference point TCP1a is defined at the distal end of the stud 23a provided in one end region of a master panel 22r in the circumferential direction (longitudinal direction), and the first reference point TCP1b is defined at the distal end of the stud 23b provided in a center region of the master panel 22r.

The first reference point is, for example, a tool center position (TCP), and is defined by, for example, a position component (an XYZ coordinate value in a work coordinate space) and a direction component (an XYZ component).

The teaching data includes two-dimensional data (hereinafter, referred to as "two-dimensional liner master data") and three-dimensional data (hereinafter, referred to as "three-dimensional liner master data") in a state where the inner liner 21 is fixed at the time of teaching.

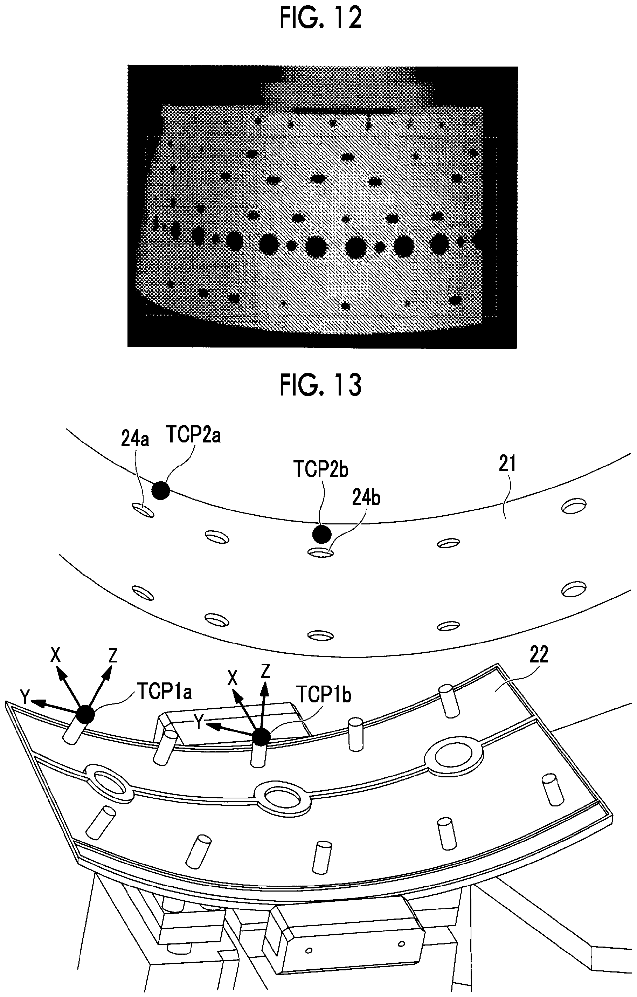

Fig. 12 is a diagram illustrating an example of two-dimensional liner master data.

The teaching data includes pieces of position data of a plurality of second reference points TCP2a and TCP2b provided on the inner liner 21 side respectively corresponding to the first reference points TCP1a and TCP1b.

Fig. 13 is a diagram for explaining the second reference point. In Fig. 13, the configuration of the inner liner 21 is simplified. As illustrated in Fig. 13, in the present embodiment, the second reference points TCP2a and TCP2b are provided, for example, on a side of the inner liner 21 opposite to a side on which the panel is fitted. In other words, the second reference points TCP2a and TCP2b are defined on the inner peripheral surface side of the inner liner 21.

The second reference point is a tool center position (TCP) in the same manner as the first reference point, and is defined, for example, by a position component (an XYZ coordinate value in a work coordinate space) and a direction component (an XYZ component).

Further, the teaching data includes control data for causing the first reference point TCP1a to be matched with the second reference point TCP2a, and control data for causing the first reference point TCP1b to be matched with the second reference point TCP2b. The control data is defined by, for example, a parameter indicating a rotation angle of each joint of the robot arm 52.

The first reference point correction unit 62 (refer to Fig. 9) obtains first correction reference points TCP1a' and TCP1b' by correcting the teaching data of the first reference points TCP1a and TCP1b defined corresponding to each of the studs 23a and 23b by comparing states (for example, positions and directions) of the studs 23a and 23b in a state where the panel 22 is gripped by the end effector 52a with states (for example, positions and directions) of the studs 23a and 23b when the teaching data is obtained.

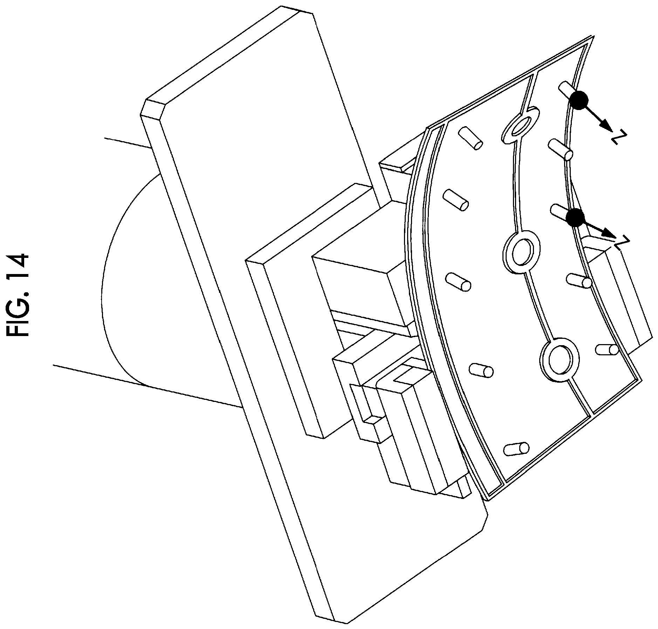

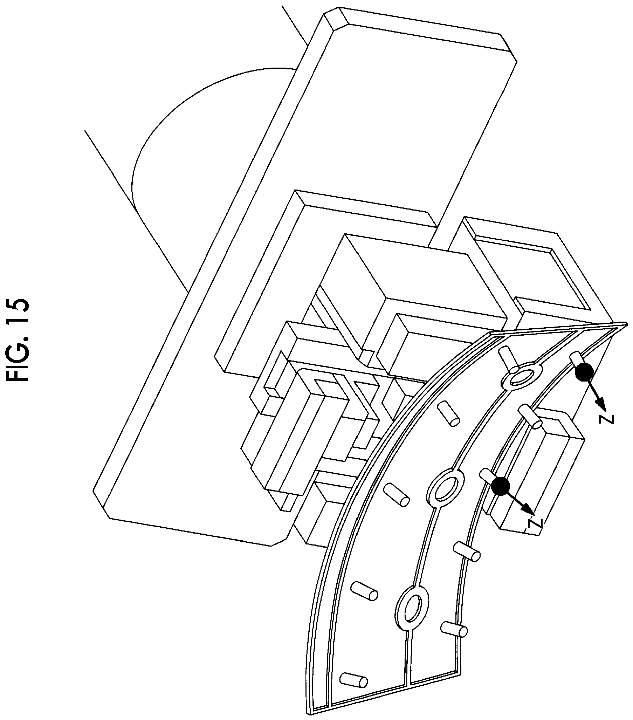

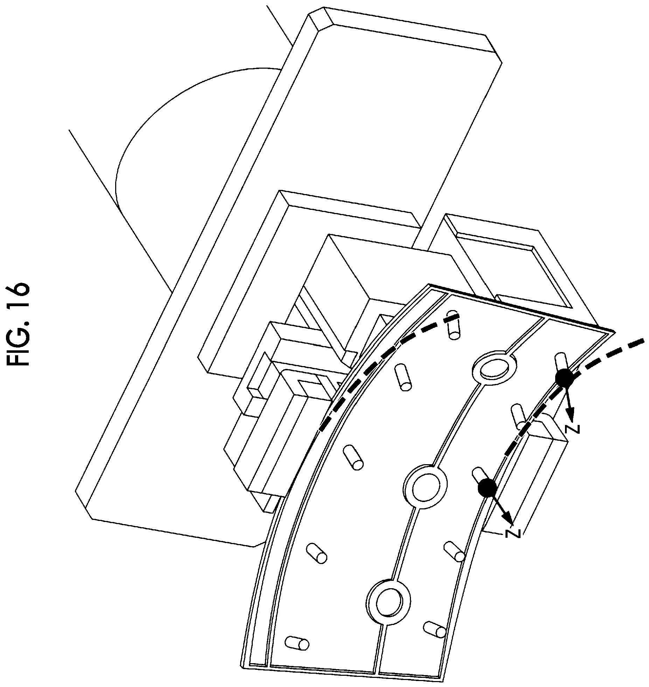

For example, the panel 22 has individual differences (manufacturing errors). Such individual differences are, for example, a curvature error of the panel, a disposition error of the stud 23, and an orientation error of the stud 23. Further, the positions and the orientations of the studs 23a and 23b are changed even by a deviation in gripping of the end effector 52a during the assembling. For example, as illustrated in Fig. 14 to Fig. 16, the states of the studs 23a and 23b are different from the states of the studs 23a and 23b when the teaching data is obtained depending on a deviation in the gripping position of the end effector 52a when gripping the panel 22, a deviation in the gripping angle of the end effector 52a when gripping the panel 22, and the like.

The control data included in the teaching data is control data for moving the first reference points TCP1a and TCP1b defined in the teaching data to the corresponding second reference points TCP2a and TCP2b. Therefore, in a case where the individual difference and the deviation in the gripping of the end effector 52a are larger than preset allowable values, each stud 23 of the panel 22 cannot be guided to the corresponding through-hole 24 of the inner liner 21.

Therefore, the first reference point correction unit 62 corrects the teaching data of the first reference points TCP1a and TCP1b based on, for example, the states of the studs 23a and 23b of the panel 22 as an assembling target.

For example, the first reference point correction unit 62 acquires the two-dimensional data and the three-dimensional data in a state where the panel 22 to be attached is gripped by the end effector 52a. Then, the first reference point correction unit 62 calculates the positional deviation and the directional deviation of the studs 23a and 23b by comparing the acquired two-dimensional data and the acquired three-dimensional data with the panel two-dimensional master data and the panel three-dimensional master data that are stored in the storage unit 61. Then, the first reference point correction unit 62 obtains the first correction reference points TCP1a' and TCP1b' by correcting the first reference points TCP1a and TCP1b using the calculation results.

Here, in a case where a deviation amount is within an allowable value, there is a high probability that the panel 22 can be fitted to the through-hole 24 by a force control to be described below, and thus, the correction of the first reference points may not be performed.

Similarly to the first reference point correction unit 62, the second reference point correction unit 63 obtains second correction reference points TCP2a' and TCP2b' by correcting the teaching data of the second reference points TCP2a and TCP2b defined corresponding to the through-holes 24a and 24b by comparing the states of the through-holes 24a and 24b in a state where the inner liner 21 is fixed with the states of the through-holes 24a and 24b when the teaching data is obtained.

For example, the second reference point correction unit 63 acquires the two-dimensional data and the three-dimensional data in a state where the inner liner 21 to be attached is fixed. Then, the second reference point correction unit 63 calculates a positional deviation of the through-holes 24a and 24b by comparing the acquired two-dimensional data and the acquired three-dimensional data with the liner two-dimensional master data and the liner three-dimensional master data that are stored in the storage unit 61. Then, the second reference point correction unit 63 obtains second correction reference points TCP2a' and TCP2b' by correcting the second reference points TCP2a and TCP2b using the calculation results.

In a case where a deviation amount is within an allowable value, there is a high probability that the panel 22 can be fitted to the through-hole 24 by a force control to be described below, and thus, the correction of the second reference points may not be performed.

In the present embodiment, the two-dimensional data and the three-dimensional data described above are acquired by using, for example, the vision sensor 54 (refer to Fig. 8). On the other hand, the present disclosure is not limited thereto. That is, a well-known sensor or the like can be appropriately adopted as long as the sensor can detect the above-described deviation amount.

The target reference point setting unit 64 sets one of the plurality of first correction reference points TCP1a' and TCP1b' as a target reference point based on a preset order. The order of setting the target reference point is set from one end region of the panel 22 toward a center region of the panel 22. In the present embodiment, the target reference point is set in order of the first correction reference points TCP1a' and TCP1b'. In a case where it is detected that the target reference point is matched with a corresponding second reference point, the target reference point setting unit 64 sets the first correction reference point in the next order as the target reference point.

The arm control unit 65 controls the robot arm 52 such that the target reference point is matched with a corresponding second reference point which is set on the inner liner 21. Specifically, the arm control unit 65 guides the end effector 52a to the desired position and causes the target reference point to be matched with the corresponding second correction reference point by controlling the angle of each joint of the robot 50 based on the control data included in the teaching data.

In a state where the target reference point is matched with the second reference point, in a case where the reaction force generated by the contact of the panel 22 (specifically, the stud 23) with the inner liner 21 exceeds a preset first threshold value, the arm control unit 65 performs force control. The reaction force can be obtained by a detection value of the force sensor 53.

The force control is, for example, control of swinging the robot arm 52 in a preset swing direction to press the panel 22 toward the inner liner 21. The swing direction may be one direction or a combination of a plurality of directions. The pressing force at this time is adjusted to a pressing force such that the panel 22 or the inner liner 21 is not deformed.

In a state where the force control is performed, in a case where the reaction force is equal to or smaller than a preset second threshold value, the arm control unit 65 assumes that the stud 23 for which the target reference point is set has entered the corresponding through-hole 24, and determines that the target reference point is matched with the second reference point.

The arm control unit 65 performs the force control until the reaction force is equal to or smaller than a preset second threshold value, until a predetermined period which is preset is elapsed, or until the number of times of the swing reaches a preset number of times. Then, in a case where the reaction force is not equal to or smaller than the second threshold value even after the predetermined period is elapsed or the number of times of the swing reaches a predetermined number of times, the robot control is stopped, and error notification is performed.

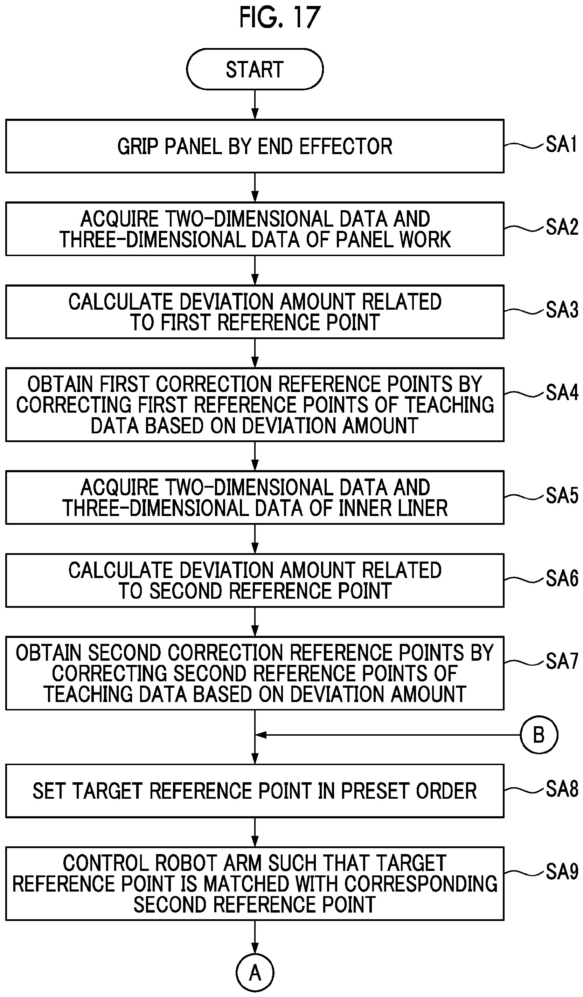

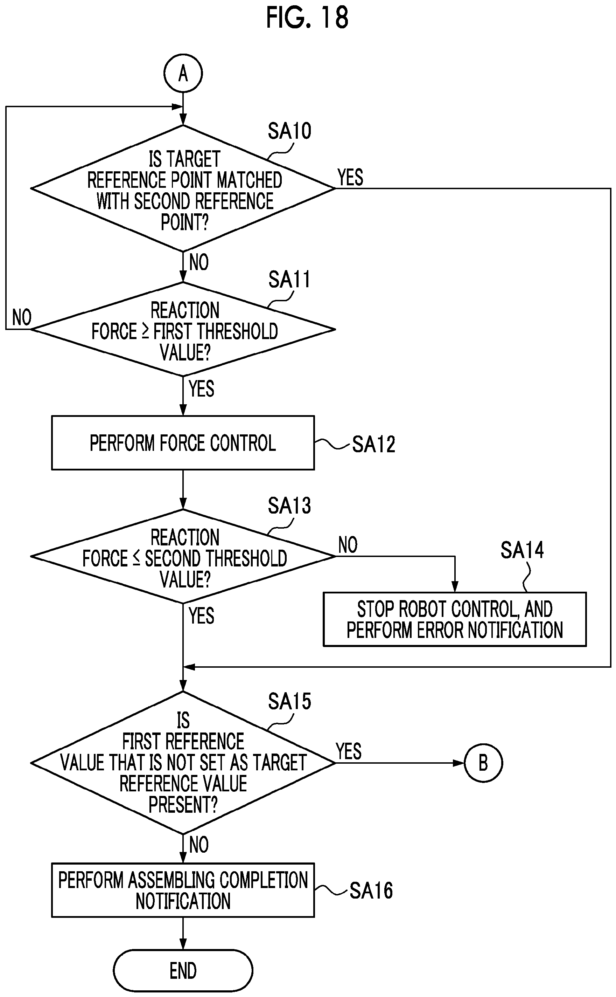

Next, a robot control method executed by the control device 60 described above will be described with reference to Fig. 17 and Fig. 18. Fig. 17 and Fig. 18 are flowcharts illustrating an example of a processing procedure of the robot control method according to the present embodiment. As an example, a series of processes for implementing each process to be described later are stored in the secondary storage in a program form. The CPU reads the program into the main memory to execute information processing and operation processing, and thus, the processes are implemented.

First, the panel 22 is gripped by the end effector 52a (SA1), and the two-dimensional data and the three-dimensional data are acquired in this state (SA2). Subsequently, a deviation amount related to the first reference point, in other words, a deviation amount of the studs 23a and 23b (a deviation amount related to the position and the direction) is calculated (SA3), by comparing the acquired two-dimensional data and the acquired three-dimensional data with the panel two-dimensional master data and the panel three-dimensional master data that are stored in the storage unit 61 as the teaching data. Subsequently, first correction reference points TCP1a' and TCP1b' are obtained (SA4), by correcting the first reference points TCP1a and TCP1b of the teaching data based on the calculated deviation amount.

Next, the two-dimensional data and the three-dimensional data are acquired in a state where the inner liner 21 is fixed (SA5). Subsequently, a deviation amount related to the second reference point (a deviation amount related to the position) is calculated (SA6), by comparing the acquired two-dimensional data and the acquired three-dimensional data with the liner two-dimensional master data and the liner three-dimensional master data that are stored in the storage unit 61 as the teaching data. Subsequently, second correction reference points TCP2a' and TCP2b' are obtained (SA7), by correcting the second reference points TCP2a and TCP2b of the teaching data based on the calculated deviation amount.

Next, the first correction reference point TCP1a' is set as the target reference point (SA8), and the robot arm 52 is controlled such that the target reference point is matched with the second correction reference point TCP2a' (SA9). Subsequently, it is determined whether or not the target reference point is matched with the second correction reference point TCP2a' (SA10 in Fig. 18). In a case where the target reference point is not matched with the second correction reference point TCP2a' (NO in SA10), it is determined whether or not the reaction force equal to or larger than the first threshold value is detected (SA11). In a case where the reaction force equal to or larger than the first threshold value is not detected (NO in SA11), the process returns to step SA10. On the other hand, in a case where the reaction force equal to or larger than the first threshold value is detected (YES in SA11), force control is performed (SA12). Thereby, the panel 22 is pressed toward the inner liner 21 with a predetermined force while the panel 22 is swung in a predetermined swing direction. The force control may be retried a predetermined number of times until the reaction force is equal to or smaller than a second threshold value which is preset.

Subsequently, it is determined whether or not the reaction force is equal to or smaller than the second threshold value which is preset (SA13). As a result, in a case where the reaction force is not equal to or smaller than the second threshold value (NO in SA13), the robot control is stopped, and error notification is performed (SA14).

On the other hand, in a case where the reaction force is equal to or smaller than the second threshold value (YES in SA13), it is determined whether or not the first correction reference point that is not set as the target reference point is present (SA15). As a result, in a case where the first correction reference point that is not set as the target reference point is present (YES in SA15), the target reference point is set according to the preset order (SA8 in Fig. 17). Thereby, the target reference point is switched from the first correction reference point TCP1a' to the first correction reference point TCP1b', and the robot arm 52 is controlled such that the first correction reference point TCP1b' is matched with the second correction reference point TCP2b' (SA9). Then, the subsequent processes are repeatedly performed. Then, in a case where the first correction reference point TCP1b' is matched with the second correction reference point TCP2b' (YES in SA10) or in a case where the reaction force is equal to or smaller than the second threshold value (YES in SA13), in step SA15, it is determined that the first correction reference point which is not set as the target reference point is not present (NO in SA15), and assembling completion notification is performed (SA16). Then, the processing is ended.

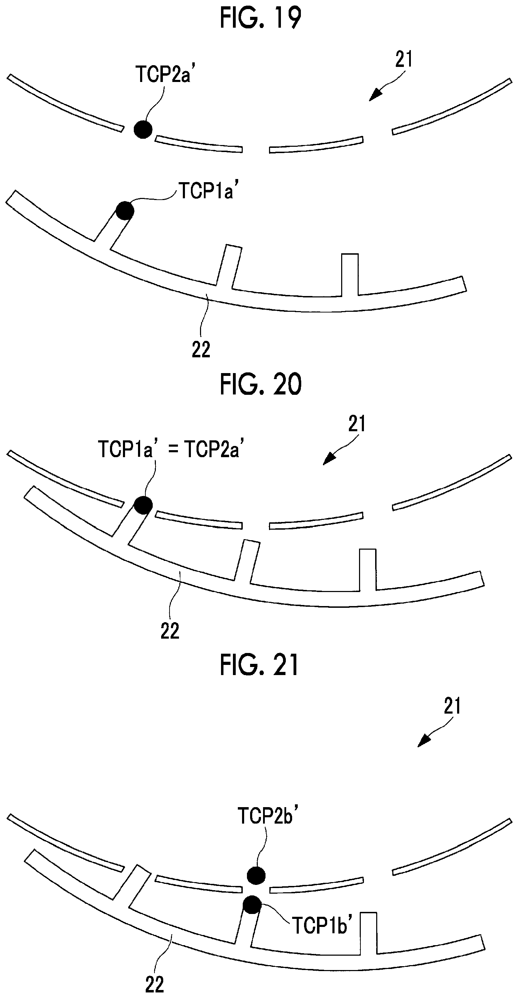

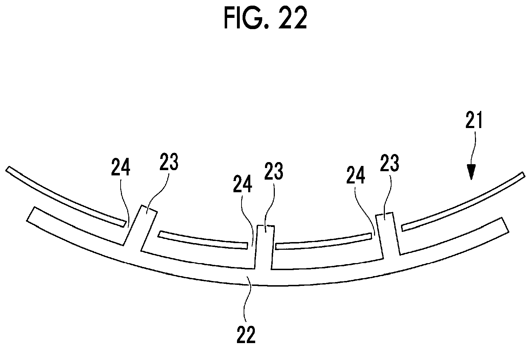

Fig. 19 to Fig. 22 are schematic diagrams for explaining switching timings of the first reference points in a case of assembling the panel 22 to the inner liner 21. In Fig. 19 to Fig. 22, the panel 22 and the inner liner 21 are illustrated in a simplified form.

As illustrated in Fig. 19, first, the first correction reference point TCP1a' provided at the end portion of the panel 22 in the circumferential direction is set as the target reference point, and the robot arm 52 is controlled such that the first correction reference point TCP1a' is matched with the second correction reference point TCP2a'. Then, as illustrated in Fig. 20, in a case where the first correction reference point TCP1a' is matched with the second correction reference point TCP2a', as illustrated in Fig. 21, the next first correction reference point TCP1b' is set as the target reference point, and the robot arm 52 is controlled such that the first correction reference point TCP1b' is matched with the second correction reference point TCP2b'. Then, as illustrated in Fig. 21, in a case where the first correction reference point TCP1b' is matched with the second correction reference point TCP2b', as a result, all the studs 23 are inserted into the through-holes 24, and assembling is ended.

As described above, according to the robot, the robot control device, the robot control method, and the program according to the present embodiment, the following actions and effects can be obtained.

For example, the control device 60 includes the first reference point correction unit 62 that corrects the teaching data of the first reference points TCP1a and TCP1b defined corresponding to each of the studs 23a and 23b, by comparing states of the studs 23 in a state where the panel 22 is gripped by the robot arm 52 with states of the studs 23 when the teaching data is obtained. Thereby, it is possible to perform assembling work considering a manufacturing error of the panel 22 and a gripping deviation when gripping the panel 22 by the robot arm 52.

Further, the control device 60 includes the target reference point setting unit 64 that determines the target reference point in order from among the plurality of first correction reference points TCP1a' and TCP1b', and the arm control unit 65 that controls the robot arm 52 such that the target reference point is matched with a corresponding second correction reference point TCP2a' or TCP2b'. Thereby, it is possible to easily assemble the panel having the plurality of studs 23 to the inner liner 21 having the plurality of through-holes 24.

As described above, the present invention has been described with reference to the embodiment, but the technical scope of the present disclosure is not limited to the above-described embodiment. Various modifications or improvements can be added to the above-described embodiment within the scope not departing from the concept of the invention, and forms to which the modifications or the improvements are added are also included in the technical scope of the present disclosure. The above-described embodiment may be appropriately combined.

The flow of the robot control method described in the above embodiment is also an example, and unnecessary steps may be deleted, new steps may be added, or the processing order may be changed without departing from the scope of the present disclosure.

The first reference point is an example, and may be defined as three or more points. That is, in a case where the number of the first reference points is M (M is an integer) and the number of the studs is N (N is an integer), the number of the first reference points is set to N ≥ M ≥ 2. For example, the first reference point may be defined in each of both end regions of the panel 22. In this case, the target reference point setting unit 64 sets the target reference values in order of the first reference point provided in the one end region, the first reference point provided in the center region, and the first reference point provided in the other end region.

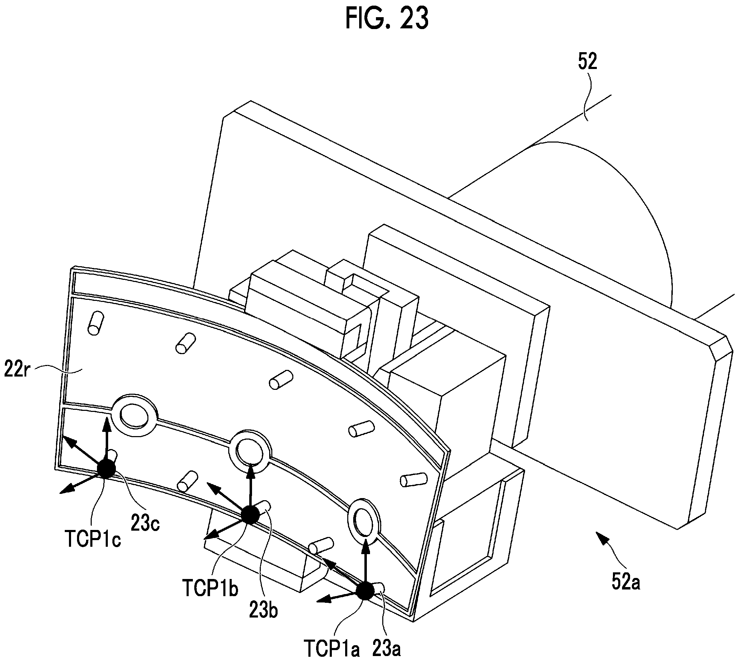

For example, as illustrated in Fig. 23, in the panel 22, the first reference point TCPlc corresponding to the stud 23c provided in the end region opposite to the end region where the stud 23a is provided may be set. In this case, the target reference point setting unit 64 sets the target reference values in order of the first reference point TCP1a provided in the one end region, the first reference point TCP1b provided in the center region, and the first reference point TCP1c provided in the other end region.

In the embodiment described above, the panel 22 having the plurality of studs 23 is used as the assembling component, and the panel 22 is gripped and assembled by the robot arm 52. On the other hand, the shapes and the like of the assembling component and the component to be assembled are not limited to this example.

In the above-described embodiment, the component having the plurality of protruding portions (screws, stud bolts, and the like) is used as the assembling component. On the other hand, instead of the component, a component having openings may be used as the assembling component, and assembling work may be performed on the component to be assembled that has a plurality of protruding portions.

In the embodiment described above, the case where the panel 22 has a curvature has been described as an example. On the other hand, the panel does not necessarily have a curvature, and may be a flat plate.

The robot, the robot control device, the robot control method, and the program according to the present embodiment described above can be understood, for example, as follows.

According to a first aspect of the present disclosure, there is provided a robot control device (60) that causes a robot arm (52) to grip an assembling component (22) having N (N is an integer equal to or larger than 2) first feature portions (23) and to assemble the assembling component to a component to be assembled (21) having N second feature portions (24) corresponding to the first feature portions, the robot control device including: a first reference point correction unit (62) that obtains M (M is an integer equal to or larger than 2 and equal to or smaller than N) first correction reference points (TCP1a', TCP1b') by correcting teaching data of M first reference points (TCP1a, TCP1b) defined corresponding to each of M first feature portions by comparing states of the M first feature portions (23a, 23b) in a state where the assembling component is gripped by the robot arm with states of the M first feature portions when the teaching data is obtained; a target reference point setting unit (64) that sets one of the M first correction reference points as a target reference point based on a preset order; and an arm control unit (65) that controls the robot arm such that the target reference point is matched with a second reference point (TCP2a, TCP2b) which is set corresponding to the second feature portion of the component to be assembled, in which the target reference point setting unit sets the first correction reference point in a next order as the target reference point in a case where it is determined that the target reference point is matched with a corresponding second reference point.

According to the present aspect, the first reference point correction unit corrects the teaching data of the M first reference points defined corresponding to each of the M first feature portions, by comparing states of the M first feature portions in a state where an assembling component is gripped by the robot arm with states of the M first feature portions when the teaching data is obtained. Thereby, it is possible to perform assembling work considering a manufacturing error of the assembling component or a gripping deviation when gripping the assembling component by the robot arm.

The robot arm is controlled such that the target reference point is matched with a corresponding second reference point, the target reference point being set in order from among the plurality of target correction reference points. In this manner, by setting the target reference point to be controlled one by one from among the plurality of target correction reference points, it is possible to efficiently guide the assembling component having the plurality of first feature portions to the corresponding second feature portions of the component to be assembled.

In the robot control device (60) according to a second aspect of the present disclosure, in the first aspect, the first feature portion may be a protruding portion (23) provided on the assembling component.

According to the present aspect, in the assembling component having N protruding portions, the teaching data of the M first reference points defined corresponding to each of the M protruding portions is corrected by comparing states of the M protruding portions with states of the M protruding portions when the teaching data is obtained. Then, assembling work is performed based on the corrected teaching data. Thereby, it is possible to perform assembling work considering a manufacturing error of the protruding portions provided on the assembling component, a gripping deviation when the robot arm grips the assembling component, and the like.

In the robot control device (60) according to a third aspect of the present disclosure, in the second aspect, the assembling component may be a panel having a curvature, and N protruding portions may be provided at intervals along a curvature direction.

According to the present aspect, in the panel which has a curvature and in which N protruding portions are provided at intervals, the teaching data of the M first reference points defined corresponding to each of the M protruding portions is corrected by comparing states of the M protruding portions with states of the M protruding portions when the teaching data is obtained. Thereby, it is possible to perform assembling work with consideration of a manufacturing error of the panel (for example, a curvature error of the panel, an error in the orientation of the protruding portion), and the like.

In the robot control device (60) according to a fourth aspect of the present disclosure, in any one of the first aspect to the third aspect, the target reference point may be set in an order from one end region of the panel to a center region of the panel.

According to the present aspect, it is possible to guide the first feature portions provided on the assembling component to the corresponding second feature portions of the component to be assembled in order from one end portion to a center portion. Thereby, assembling work can be efficiently performed.

In the robot control device (60) according to a fifth aspect of the present disclosure, in any one of the first aspect to the fourth aspect, the first reference point correction unit may acquire three-dimensional data and two-dimensional data in a state where the assembling component is gripped by the robot arm, and correct the teaching data of the M first reference points by comparing the acquired three-dimensional data and the acquired two-dimensional data with three-dimensional data and two-dimensional data when the teaching data is obtained.

According to the present aspect, correction of the teaching data is performed using the three-dimensional data and the two-dimensional data in a state where the assembling component is gripped by the robot arm. Thereby, it is possible to efficiently calculate a deviation amount in which both a manufacturing error of the assembling component and a deviation in gripping of the assembling component by the robot arm are reflected.

In the robot control device (60) according to a sixth aspect of the present disclosure, in any one of the first aspect to the fifth aspect, in a state where the target reference point is matched with the second reference point, in a case where a reaction force generated by contact of the assembling component with the component to be assembled exceeds a first threshold value which is preset, the arm control unit may perform force control of pressing the assembling component toward the component to be assembled while causing the robot arm to swing in a swing direction which is preset.

According to the present aspect, in a case where the assembling component comes into contact with the component to be assembled and a reaction force from the component to be assembled exceeds a first threshold value due to the contact, force control of pressing the assembling component toward the component to be assembled while causing the robot arm to swing in a preset swing direction is performed. Thereby, even in a case where an error that cannot be corrected by the first reference point correction unit occurs or the assembling component comes into contact with the component to be assembled, by pressing the assembling component toward the component to be assembled while causing the robot arm to swing, it is possible to guide the first feature portions of the assembling component to the corresponding second feature portions of the component to be assembled while searching for the second reference value.

In the robot control device (60) according to a seventh aspect of the present disclosure, in the sixth aspect, in a state where the force control is performed, in a case where the reaction force is equal to or smaller than a second threshold value which is preset, the arm control unit may determine that the target reference point is matched with the second reference point.

When performing the force control, in a case where the reaction force is equal to or smaller than the second threshold value, it can be considered that contact between the assembling component and the component to be assembled is released and the first reference point reaches the corresponding second reference point. Therefore, in a case where the reaction force is equal to or smaller than the second threshold value, it is determined that the target reference point is matched with the second reference point, and thus it is possible to efficiently perform assembling control.

In the robot control device (60) according to an eighth aspect of the present disclosure, in the seventh aspect, the arm control unit may repeatedly perform the force control until the reaction force is equal to or smaller than the second threshold value which is preset, and in a case where the reaction force is not equal to or smaller than the second threshold value even after the force control is performed a predetermined number of times, the arm control unit may perform error notification.

In a case where the reaction force is not equal to or smaller than the second threshold value even after the force control is repeatedly performed a predetermined number of times, it can be considered that an error that cannot be resolved by the force control occurs between the assembling component and the component to be assembled. Therefore, in such a case, by performing error notification, it is possible to efficiently perform notification of a defective product and to promptly respond to the defective product.

In any one of the first aspect to the eighth aspect, the robot control device (60) according to a ninth aspect of the present disclosure may further include: a second reference point correction unit (63) that obtains M second correction reference points (TCP2a', TCP2b') by correcting teaching data of the M second reference points (TCP2a, TCP2b) defined corresponding to each of the M second feature portions by comparing states of the M second feature portions in a state where the component to be assembled is fixed with states of the M second feature portions when the teaching data is obtained, and the arm control unit may control the robot arm such that the target reference point is matched with a corresponding second correction reference point.

According to the present aspect, the second reference point correction unit corrects the teaching data of the M second reference points defined corresponding to each of the M second feature portions, by comparing states of the M second feature portions in a state where the component to be assembled is fixed with states of the M second feature portions when the teaching data is obtained. Thereby, it is possible to perform assembling work considering a manufacturing error and an installation error of the component to be assembled in addition to a manufacturing error of the assembling component. Thereby, it is possible to further efficiently perform assembling work.

A robot according to a first aspect of the present disclosure includes the robot control device according to any one of the first aspect to the ninth aspect.

There is provided a robot control method according to a first aspect of the present disclosure, the robot control method of causing a robot arm to grip an assembling component having N (N is an integer equal to or larger than 2) first feature portions and to assemble the assembling component to a component to be assembled having N second feature portions corresponding to the first feature portions. The robot control method causes a computer to execute: a step (SA4) of obtaining M (M is an integer equal to or larger than 2 and equal to or smaller than N) first correction reference points by correcting teaching data of M first reference points defined corresponding to each of M first feature portions by comparing states of the M first feature portions in a state where the assembling component is gripped by the robot arm with states of the M first feature portions when the teaching data is obtained; a step (SA8) of setting one of the M first correction reference points as a target reference point based on a preset order; a step (SA9 to SA15) of controlling the robot arm such that the target reference point is matched with a second reference point which is set corresponding to the second feature portion of the component to be assembled; and a step (SA8) of setting the first correction reference point in a next order as the target reference point in a case where it is determined that the target reference point is matched with a corresponding second reference point.

A program according to a first aspect of the present disclosure is a program for causing a computer to function as the robot control device according to any one of the first aspect to the ninth aspect.

### Reference Signs List

1: combustor
20: inner combustor
21: inner liner
22: inner liner panel (panel: assembling component)
22r: master panel
23, 23a, 23b: stud (first feature portion)
24, 24a, 24b: through-hole (second feature portion)
25: washer
26: nut
27: through-hole
50: robot
52: robot arm
52a: end effector
53: force sensor
60: control device (robot control device)
61: storage unit
62: first reference point correction unit
63: second reference point correction unit
64: target reference point setting unit
65: arm control unit
TCP1a, TCP1b, TCP1c: first reference point
TCP1a', TCP1b': first correction reference point
TCP2a, TCP2b: second reference point
TCP2a', TCP2b': second correction reference point

## Claims

1. A robot control device that causes a robot arm to grip an assembling component having N (N is an integer equal to or larger than 2) first feature portions and to assemble the assembling component to a component to be assembled having N second feature portions corresponding to the first feature portions, the robot control device comprising:
a first reference point correction unit that obtains M (M is an integer equal to or larger than 2 and equal to or smaller than N) first correction reference points by correcting teaching data of M first reference points defined corresponding to each of M first feature portions by comparing states of the M first feature portions in a state where the assembling component is gripped by the robot arm with states of the M first feature portions when the teaching data is obtained;
a target reference point setting unit that sets one of the M first correction reference points as a target reference point based on a preset order; and
an arm control unit that controls the robot arm such that the target reference point is matched with a second reference point which is set corresponding to the second feature portion of the component to be assembled,
wherein the target reference point setting unit sets the first correction reference point in a next order as the target reference point in a case where it is determined that the target reference point is matched with a corresponding second reference point.

2. The robot control device according to claim 1,
wherein the first feature portion is a protruding portion provided on the assembling component.

3. The robot control device according to claim 2,
wherein the assembling component is a panel having a curvature, and
N protruding portions are provided at intervals along a curvature direction.

4. The robot control device according to claim 3,
wherein the target reference point is set in an order from one end region of the panel to a center region of the panel.

5. The robot control device according to claim 1,
wherein the first reference point correction unit acquires three-dimensional data and two-dimensional data in a state where the assembling component is gripped by the robot arm, and corrects the teaching data of the M first reference points by comparing the acquired three-dimensional data and the acquired two-dimensional data with three-dimensional data and two-dimensional data when the teaching data is obtained.

6. The robot control device according to claim 1,
wherein, in a case where the target reference point is matched with the second reference point and a reaction force generated by contact of the assembling component with the component to be assembled exceeds a first threshold value which is preset, the arm control unit performs force control of pressing the assembling component toward the component to be assembled while causing the robot arm to swing in a swing direction which is preset.

7. The robot control device according to claim 6,
wherein, in a case where the force control is performed and the reaction force is equal to or smaller than a second threshold value which is preset, the arm control unit determines that the target reference point is matched with the second reference point.

8. The robot control device according to claim 7,
wherein the arm control unit repeatedly performs the force control until the reaction force is equal to or smaller than the second threshold value which is preset, and in a case where the reaction force is not equal to or smaller than the second threshold value even after the force control is performed a predetermined number of times, the arm control unit performs error notification.

9. The robot control device according to claim 1, further comprising:
a second reference point correction unit that obtains M second correction reference points by correcting teaching data of M second reference points defined corresponding to each of M second feature portions by comparing states of the M second feature portions in a state where the component to be assembled is fixed with states of the M second feature portions when the teaching data is obtained,
wherein the arm control unit controls the robot arm such that the target reference point is matched with a corresponding second correction reference point.

10. A robot comprising:
the robot control device according to claim 1.

11. A robot control method of causing a robot arm to grip an assembling component having N (N is an integer equal to or larger than 2) first feature portions and to assemble the assembling component to a component to be assembled having N second feature portions corresponding to the first feature portions, the robot control method causing a computer to execute:
a step of obtaining M (M is an integer equal to or larger than 2 and equal to or smaller than N) first correction reference points by correcting teaching data of M first reference points defined corresponding to each of M first feature portions by comparing states of the M first feature portions in a state where the assembling component is gripped by the robot arm with states of the M first feature portions when the teaching data is obtained;
a step of setting one of the M first correction reference points as a target reference point based on a preset order;
a step of controlling the robot arm such that the target reference point is matched with a second reference point which is set corresponding to the second feature portion of the component to be assembled; and
a step of setting the first correction reference point in a next order as the target reference point in a case where it is determined that the target reference point is matched with a corresponding second reference point.

12. A program causing a computer to function as the robot control device according to claim 1.
